# EUROPÄISCHE PATENTSCHRIFT

(11) **EP 2 336 074 B1**
(45) Veröffentlichungstag und Bekanntmachung des Hinweises auf die Patenterteilung: **20.06.2012**
(21) Anmeldenummer: 10015441.8
(22) Anmeldetag: 08.12.2010
(51) Int. Cl.: B66D 1/46, B66D 1/44, B66D 3/00, A01G 23/00

(54) **Umrüstvorrichtung zum Umrüsten mechanischer Seilwinden**
Conversion device for converting mechanical cable winches
Dispositif de rééquipement pour rééquiper des treuils à câble mécaniques

(30) Priorität: 16.12.2009 DE 102009058684
(43) Veröffentlichungstag der Anmeldung: 22.06.2011
(73) Patentinhaber: Brey, Bertram, 93474 Ottenzell (DE)
(72) Erfinder: Brey, Bertram, 93474 Ottenzell (DE)
(74) Vertreter: advotec.

(56) Entgegenhaltungen:
- WO-A1-2005/031934
- CH-A5- 568 930
- DE-U1- 29 700 687
- FR-A1- 2 829 070
- US-A1- 2008 224 112

## Beschreibung

Die vorliegende Erfindung betrifft eine Umrüstvorrichtung zum Umrüsten mechanischer Seilwinden.

Seilwinden sind seit langem aus dem Stand der Technik bekannt und man versteht darunter im Prinzip eine Vorrichtung, mit der man mit Hilfe eines Seils etwas ziehen kann. Dabei wird das Seil meist auf einer durch einen Motor oder durch Muskelkraft angetriebenen zylindrischen Trommel aufgewickelt.

Meist sind die Seilwinden an einem Kraftfahrzeug, insbesondere an einem Schlepper, Traktor etc. angeordnet. Diese Seilwinden werden in der Regel durch die Zapfwelle des Kraftfahrzeuges angetrieben und werden typischerweise für Forstarbeiten angewendet. Wesentliche Teile einer solchen Seilwinde sind in der Regel ein Stützschild, eine antreibbare Seiltrommel, ein Untersetzungsgetriebe, welches die Drehbewegung der Zapfwelle des Kraftfahrzeuges in eine langsamere Drehbewegung der Seiltrommel übersetzt, eine Kupplung, ein Seil, eine Seilumlenkung, welche das Seil von der, der Last zugewandten Seite des Stützschildes an die auf der anderen Seite des Stützschildes angeordnete Seiltrommel umlenkt, sowie eine Bremse. Mit Hilfe der genannten Kupplung ist der Antriebsstrang zwischen Zapfwelle und Seiltrommel schaltbar unterbrechbar. Die Bremse verhindert ein Auf- beziehungsweise Abwickeln des Seils von der Seiltrommel. Durch ein Lösen der Bremse kann die Seilwinde in einen Freilauf oder Schnellgang geschaltet werden, wodurch das Seil schneller ausziehbar ist. Dabei wird die Trommel vom Bremsband gelöst getrennt.

Das Antriebsgetriebe der Seilwinde wird durch die Zapfwelle in der Regel ständig angetrieben, also auch dann, wenn die Seiltrommel nicht läuft. Die Verbindung der Seiltrommel mit dem Antriebsgetriebe wird durch die genannte Kupplung besorgt.

Viele der genannten Seilwinden werden mechanisch angetrieben. Derartige mechanische Winden werden über Seilzüge bedient. Dies setzt voraus, dass eine Bedienperson an der Maschine stehen bleibt. Ferner sind aus dem Stand der Technik auch Seilwinden bekannt, die hydraulisch angetrieben werden. Derartige hydraulisch betriebene Seilwinden können auch über eine Fernsteuerung gesteuert werden.

In der Praxis ist es häufig gewünscht, mechanische Seilwinden auf einen elektrohydraulischen Funkbetrieb umzubauen. Ein derartiger Umbau ist jedoch sehr aufwendig und wird daher selten durchgeführt.

Der vorliegenden Erfindung liegt die Aufgabe zugrunde, eine Vorrichtung zur Verfügung zu stellen, mit deren Hilfe ein einfaches und schnelles Umrüsten einer mechanischen Seilwinde auf elektrohydraulischen Funkbetrieb möglich ist.

Diese Aufgabe wird gelöst durch eine Umrüstvorrichtung zum Umrüsten mechanischer Seilwinden auf elektrohydraulischen Funkbetrieb, umfassend einen Hydraulikzylinder zum Betätigen einer Bremse der Seilwinde und einen Hydraulikzylinder zum Betätigen einer Kupplung der Seilwinde, wobei die beiden Hydraulikzylinder jeweils mit einem Verbindungsmittel zur Verbindung mit einem Bremshebel beziehungsweise Kupplungshebel der Seilwinde gekoppelt sind, ferner umfassend ein Hydraulikventil zur Steuerung der Hydraulikzylinder, das mit einer Hydraulikversorgung verbindbar ist, sowie einen Funkempfänger zum Empfangen von Signalen eines Senders zur Ansteuerung des Hydraulikventils.

Durch die erfindungsgemäße kompakte Umrüstvorrichtung ist ein äußerst einfaches und schnelles Umrüsten einer mechanischen Seilwinde auf elektrohydraulischen Funkbetrieb möglich. Die erfindungsgemäße Vorrichtung nutzt in idealer Weise das, bereits am Kraftfahrzeug vorhandene Hydrauliksystem zur Betätigung der genannten Hydraulikzylinder. Das Installieren der erfindungsgemäßen Vorrichtung ist äußerst einfach. Vor der Montage werden zunächst die Seilzüge inklusive Seilumlenkrollen, mit Hilfe derer die Bedienung der Seilwinde bis dahin erfolgte, entfernt. Anschließend wird die erfindungsgemäße Umrüstvorrichtung an einer geeigneten Stelle an der Winde des Kraftfahrzeuges montiert. Dies erfolgt in der Regel durch Verschrauben einer Bodenplatte oder Seitenwand der Umrüstvorrichtung mit der Winde (Anbauwinde). Anschließend werden die Verbindungsmittel, welche mit den beiden Hydraulikzylindern gekoppelt sind, mit dem Bremshebel beziehungsweise Kupplungshebel der Seilwinde verbunden. Die Fixierung an den Hebeln erfolgt in der Regel über Seilklemmen. Anschließend muss die erfindungsgemäße Umrüstvorrichtung lediglich noch mit der Hydraulikversorgung des Kraftfahrzeuges, auf dem die Seilwinde befestigt ist, verbunden werden. Hierzu weist die erfindungsgemäße Umrüstvorrichtung in der Regel einen Hydraulikstecker zum Anschluss an den Hydraulikvorlauf und einen Hydraulikstecker zum Anschluss an den Hydraulikrücklauf auf.

In DE 297 00 687 U1 wird eine Umsetzvorrichtung zur ferngesteuerten Betätigung einer Steuereinheit eines Industriegeräts (z.B. eines Krans) beschrieben. Ziel der in dem genannten Dokument beschriebenen Umsetzvorrichtung ist es, ein Industriegerät mittels eines Fernsteuersenders zu steuern. Es kann hier beispielsweise mittels Fernsteuerung ein Steuerknüppel eines Industriegeräts betätigt werden. Eine Umrüstung mechanischer Seilwinden auf elektrohydraulischen Funkbetrieb ist in dieser Druckschrift jedoch nicht beschrieben.

In US 2008/0224112 A1 wird eine Maschine (z.B. eine Raupe) mit einer Seilwinde beschrieben, die über eine Steuereinheit, die an der Maschine oder auch außerhalb der Maschine angeordnet sein kann, gesteuert wird. Auch in dieser Druckschrift ist jedoch keine Vorrichtung zum Umrüsten mechanischer Seilwinden auf elektrohydraulischen Funkbetrieb beschrieben. Auch wird in dieser Druckschrift nicht beschrieben, dass ein Hydraulikzylinder eine Bremse der Seilwinde betätigt und ein anderer Hydraulikzylinder eine Kupplung der Seilwinde betätigt. Somit ist auch der Betrieb der in der genannten Druckschrift beschriebenen Seilwinde ein völlig anderer als bei der erfindungsgemäßen Umrüstvorrichtung.

Ähnliches gilt auch für die FR 2 829 070 A1. Auch hier wird eine Fernsteuerung einer Seilwinde an einem landwirtschaftlichen Gerät beschrieben. Auch hier wird jedoch an keiner Stelle eine Umrüstvorrichtung mit Merkmalen der erfindungsgemäßen Umrüstvorrichtung beschrieben.

Bei einer besonders bevorzugten Ausführungsform der erfindungsgemäßen Umrüstvorrichtung ist diese als Umrüstbox mit einem, vorzugsweise im Wesentlichen geschlossenen Gehäuse ausgebildet. In diesem Gehäuse sind in der Regel Aussparungen zum Hindurchführen beispielsweise der Verbindungsmittel sowie der Anschlüsse für den Hydraulikkreislauf. Auch kann eine Aussparung zum Hindurchführen einer Funkantenne im Gehäuse der Umrüstbox vorhanden sein. Durch die Ausbildung der erfindungsgemäßen Umrüstvorrichtung als Umrüstbox ist diese auf besonders einfache Art und Weise an einem Kraftfahrzeug montierbar. Ferner zeichnet sich eine derartige Umrüstbox durch ihre Kompaktheit und einfache Transportierbarkeit aus.

Die Verbindungsmittel zur Verbindung der Hydraulikzylinder mit einem Bremshebel beziehungsweise Kupplungshebel der Seilwinde können theoretisch Verbindungsstangen sein. Vorzugsweise sind die Verbindungsmittel jedoch Seile, insbesondere Drahtseile. Seile eignen sich besonders gut zur Betätigung einer Kupplung beziehungsweise einer Bremse einer Seilwinde und sind bei der Montage der erfindungsgemäßen Umrüstvorrichtung besonders vorteilhaft, da diese flexibel und nicht starr sind, wie dies bei einer Stange der Fall ist.

Bei einer bevorzugten Ausführungsform der erfindungsgemäßen Umrüstvorrichtung weisen die Hydraulikzylinder an ihren Kolbenstangen jeweils eine Seilrolle auf. An dieser Seilrolle sind die oben genannten Verbindungsmittel in Form von Seilen geführt. Das Ende dieser Seile ist in der Regel an der Umrüstvorrichtung, insbesondere am Gehäuse der Umrüstvorrichtung fixiert. Das andere Ende dieser Seile befindet sich an den Betätigungshebeln (Brems- bzw. Kupplungshebel). Durch die Führung dieser Seile durch die genannten Seilrollen wird die Betätigung der Brems- beziehungsweise Kupplungshebel der Seilwinde besonders optimiert, da der Verfahrweg beim Ausfahren der Kolbenstangen der Zylinder quasi effektiv verdoppelt werden kann und dies auf kleinstmöglichem Raum.

Vorzugsweise weist die erfindungsgemäße Umrüstvorrichtung einen Stromanschluss, insbesondere zum Anschließen an eine 12 V-Stromversorgung auf. Dadurch kann die erfindungsgemäße Umrüstvorrichtung in einfacher Art und Weise an die Stromversorgung des jeweiligen Kraftfahrzeuges angeschlossen werden.

Mit Vorteil umfasst die erfindungsgemäße Umrüstvorrichtung einen Druckspeicher (Ausdehnungsgefäß für Hydraulikflüssigkeit) zum Ausgleich von Hydraulikspitzen in den Hydraulikzylindern.

Vorzugsweise weisen die Hydraulikzylinder Rückholfedern auf. Durch diese Rückholfedern werden die Bedienhebel (Brems- und Kupplungshebel) der Seilwinde bei Drucklosschalten des jeweiligen Hydraulikzylinders automatisch in die jeweilige Ausgangsposition zurückgezogen.

Die vorliegende Erfindung betrifft ferner eine Seilwinde, welche dadurch gekennzeichnet ist, dass ihr eine erfindungsgemäße Umrüstvorrichtung zugeordnet ist. Eine derartige Seilwinde kann auf einfache Art und Weise in kürzester Zeit von einer mechanischen Seilwinde in eine elektrohydraulisch betriebene Seilwinde umgerüstet werden. Der Umrüstvorgang ist selbstverständlich auch umgekehrt möglich.

Die vorliegende Erfindung betrifft ferner die Verwendung einer erfindungsgemäßen Umrüstvorrichtung zum Umrüsten einer zapfwellengetriebenen mechanischen Seilwinde auf elektrohydraulischen Funkbetrieb.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Figur 1:: eine perspektivische Darstellung einer erfindungsgemäßen Umrüstbox mit teilweise entfernter Frontwand;
- Figur 2:: eine Darstellung eines Traktors mit umgerüsteter Seilwinde;
- Figur 3:: die Umrüstbox gemäß Figur 1 im montierten Zustand.

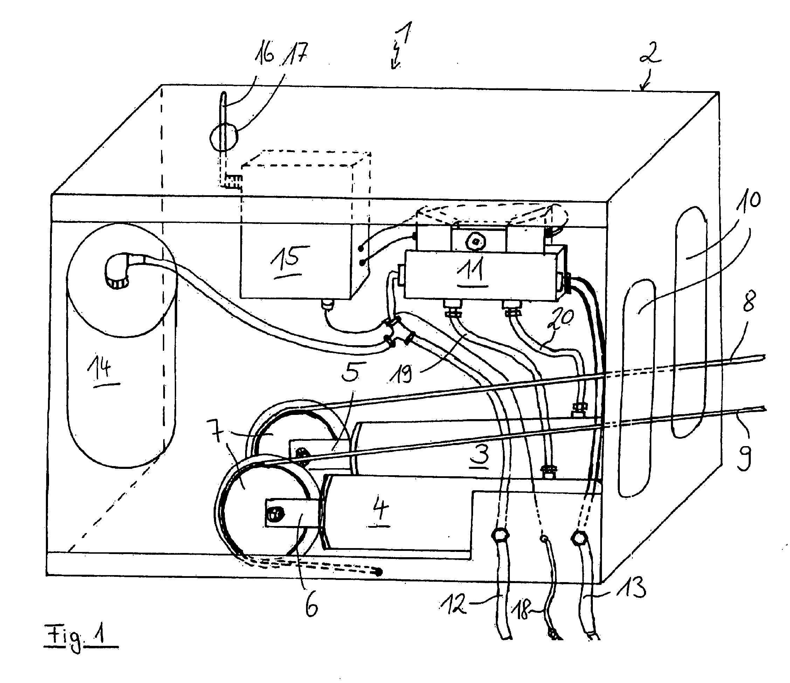

Figur 1 zeigt eine erfindungsgemäße Umrüstbox 1 zum Umrüsten mechanischer Seilwinden auf elektrohydraulischen Funkbetrieb mit einem Gehäuse 2, in dem ein Hydraulikzylinder 3 zum Betätigen einer Bremse einer Seilwinde und ein Hydraulikzylinder 4 zum Betätigen einer Kupplung einer Seilwinde angeordnet sind. Die Kolbenstangen 5 beziehungsweise 6 der Hydraulikzylinder 3 beziehungsweise 4 weisen an ihren freien Enden jeweils eine Seilrolle 7 auf. Die Seilrollen 7 führen jeweils ein Verbindungsseil 8 beziehungsweise 9, welche den Hydraulikzylinder 3 beziehungsweise den Hydraulikzylinder 4 mit einem Bremshebel beziehungsweise Kupplungshebel einer Seilwinde verbinden. Die Seile 8 und 9 sind Drahtseile, die an einem Ende am Gehäuse 2 befestigt sind. Zum Hindurchführen der Drahtseile 8 und 9 durch das Gehäuse 2 weist dieses zwei längliche Aussparungen 10 auf.

Im Gehäuse 2 der Box 1 ist ferner ein Hydraulikventil 11 zur Steuerung der Hydraulikzylinder 3 und 4 angeordnet. Das Hydraulikventil 11 ist durch Hydraulikleitungen 12 (Hydraulikvorlauf) beziehungsweise 13 (Hydraulikrücklauf) an den Hydraulikkreislauf eines Kraftfahrzeuges, zum Beispiel eines Schleppers, anschließbar. In die Leitung 12 des Hydraulikvorlaufs ist ferner ein Druckspeicher 14 für Hydraulikflüssigkeit zum Ausgleichen von Hydraulikspitzen geschaltet.

Im Gehäuse 2 ist ferner ein Funkempfänger 15 zum Empfang von Funkwellen eines Senders angeordnet. Der Funkempfänger 15 weist eine Antenne 16 auf, welche durch eine Aussparung 17 des Gehäuses 2 ragt. Der Funkempfänger 15 im angeschlossenen Zustand steht über eine elektrische Leitung 18 mit einer 12 V-Stromversorgung in Verbindung.

Der Funkempfänger 15 übermittelt empfangene Befehle, die von einem Sender übermittelt wurden, an das Hydraulikventil 11. Das Hydraulikventil 11 steuert seinerseits die Hydraulikzylinder 3 und 4. Erhält der Funkempfänger 15 beispielsweise den Befehl "Bremsen", so steuert das Hydraulikventil 11 den Hydraulikzylinder 3 an, sodass die Kolbenstange 5 dieses Hydraulikzylinders 3 ausfährt. Dadurch wird der - hier nicht dargestellte - Bremshebel, der mit dem Drahtseil 8 in Verbindung steht, in Richtung der Box 1 gezogen, wodurch die Bremse, die in der Grundstellung (Hydraulikzylinder 3 ist eingefahren) in Bremsstellung ist, gelöst wird. Nach dem Lösen der Bremse kann das Seil von der Seilwinde abgezogen werden und kann zu einem zu ziehenden Gegenstand (zum Beispiel Baumstamm) gebracht werden.

Soll im Anschluss daran der zu ziehende Gegenstand, der mittlerweile mit dem Seil der Seilwinde verbunden ist, gezogen werden, gibt die Bedienperson am Sender den Befehl "Ziehen". Das Funksignal wird wiederum vom Funkempfänger 15 empfangen. Dieser gibt den Befehl an das Hydraulikventil 11 weiter, worauf dieses Hydraulikflüssigkeit über die Hydraulikleitung 19 in den Hydraulikzylinder 4 strömen lässt. Der Hydraulikzylinder 3 wird seinerseits über die Hydraulikleitung 20 versorgt. Durch das Einströmen von Hydraulikflüssigkeit in den Hydraulikzylinder 4 fährt dessen Kolbenstange 6 aus, wodurch der mit dem Drahtseil 9 verbundene Kupplungshebel der Seilwinde (hier nicht dargestellt) in Richtung der Box 1 gezogen wird. Dadurch kommt es zur Kupplung zwischen der Zapfwelle des Kraftfahrzeuges und der Seiltrommel, wodurch das Seil der Seilwinde auf die Seiltrommel aufgerollt wird und der zu ziehende Gegenstand in Richtung des Kraftfahrzeuges gezogen wird. Durch die Seilrolle 7 an der Kolbenstange 6 ergeben sich die gleichen Vorteile wie bei der Kolbenstange 5 (siehe oben).

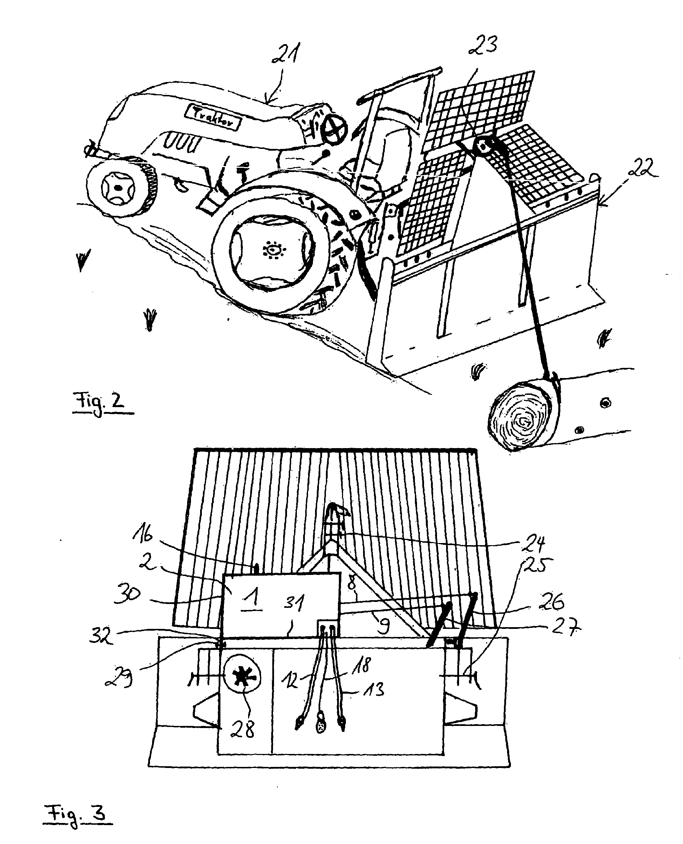

Figur 2 zeigt einen Traktor 21 mit einem Anbau 22 und daran angeordneter Seilwinde 23. Die Seilwinde 23 wird über die Umrüstbox 1, die hier nicht zu erkennen ist, da sie auf der Traktorseite des Anbaus 22 angeordnet ist, gesteuert.

Figur 3 zeigt die Umrüstbox 1 im am Anbau 22 (= Winde) des Traktors 21 montierten Zustand. Der Anbau 22 ist über Verbindungsbolzen 24 und 25 am Traktor befestigt. Das Drahtseil 8 der Umrüstbox 1 ist mit dem Bremshebel 26 der Seilwinde 23 verbunden. Das Drahtseil 9 ist mit dem Kupplungshebel 27 der Seilwinde 23 verbunden. Durch Betätigung des Bremshebels 26 durch Ziehen desselben in Richtung der Umrüstbox 1 wird die Bremse der Seilwinde 23 gelöst, sodass das Abschleppseil (hier nicht dargestellt) ausgezogen werden kann. Durch Betätigung des Kupplungshebels 27 kommt es zur Kupplung zwischen der Zapfwelle 28 des Traktors 21 und der Seilwinde 23, wodurch das Abschleppseil eingezogen wird.

Die Umrüstbox 1 ist mittels Schrauben 29 am Anbau 22 des Traktors 21 befestigt. Um eine vereinfachte Montage zu erreichen, ist die Stirnwand 30 des Gehäuses 2 verlängert ausgebildet und ragt über die Bodenplatte 31 des Gehäuses 2 etwas hinaus. Der die Bodenplatte 31 überragende Bereich 32 dient als Befestigungsabschnitt zum Hindurchführen der Schrauben 29.

## Patentansprüche

1. Umrüstvorrichtung (1) zum Umrüsten mechanischer Seilwinden (23) auf elektrohydraulischen Funkbetrieb, umfassend einen Hydraulikzylinder (3) zum Betätigen einer Bremse der Seilwinde und einen Hydraulikzylinder (4) zum Betätigen einer Kupplung der Seilwinde, wobei die beiden Hydraulikzylinder jeweils mit einem Verbindungsmittel (8, 9) zur Verbindung mit einem Bremshebel (26) beziehungsweise Kupplungshebel (27) der Seilwinde gekoppelt sind, ferner umfassend ein Hydraulikventil (11) zur Steuerung der Hydraulikzylinder, das mit einer Hydraulikversorgung verbindbar ist, sowie einen Funkempfänger (15) zum Empfangen von Signalen eines Senders zur Ansteuerung des Hydraulikventils.

2. Umrüstvorrichtung nach Anspruch 1, **dadurch gekennzeichnet, dass** sie als Umrüstbox (1) mit einem, vorzugsweise im Wesentlichen geschlossenen Gehäuse (2) ausgebildet ist.

3. Umrüstvorrichtung nach einem der Ansprüche 1 oder 2, **dadurch gekennzeichnet, dass** die Verbindungsmittel Seile, insbesondere Drahtseile (8, 9) sind.

4. Umrüstvorrichtung nach einem der vorhergehenden Ansprüche,
**dadurch gekennzeichnet, dass** die Hydraulikzylinder (3, 4) an ihren Kolbenstangen (5, 6) jeweils eine Seilrolle (7) aufweisen.

5. Umrüstvorrichtung nach einem der vorhergehenden Ansprüche,
**gekennzeichnet durch** einen Stromanschluss (18), insbesondere zum Anschließen an eine 12 V-Stromversorgung.

6. Umrüstvorrichtung nach einem der vorhergehenden Ansprüche,
**gekennzeichnet durch** einen Druckspeicher (14) für Hydraulikflüssigkeit zum Ausgleich von Hydraulikspitzen in den Hydraulikzylindern (3,4).

7. Umrüstvorrichtung nach einem der vorhergehenden Ansprüche,
**dadurch gekennzeichnet, dass** die Hydraulikzylinder (3, 4) Rückholfedern aufweisen.

8. Seilwinde, **dadurch gekennzeichnet, dass** ihr eine Vorrichtung nach einem der Ansprüche 1 bis 7 zugeordnet ist.

9. Verwendung einer Vorrichtung mit den Merkmalen nach einem der Ansprüche 1 bis 7 zum Umrüsten einer zapfwellengetriebenen mechanischen Seilwinde (23) auf elektrohydraulischen Funkbetrieb.

## Claims

1. Conversion apparatus (1) for converting mechanical cable winches (23) to electrohydraulic radio operation, comprising a hydraulic cylinder (3) for actuating a brake of the cable winch and a hydraulic cylinder (4) for actuating a clutch of the cable winch, the two hydraulic cylinders being coupled in each case to a connecting means (8, 9) for connection to a brake lever (26) or clutch lever (27) of the cable winch, comprising, furthermore, a hydraulic valve (11) for controlling the hydraulic cylinders which can be connected to a hydraulic supply, and a radio receiver (15) for receiving signals of a transmitter for actuating the hydraulic valve.

2. Conversion apparatus according to Claim 1, **characterized in that** it is configured as a conversion box (1) with a preferably substantially closed housing (2).

3. Conversion apparatus according to either of Claims 1 and 2, **characterized in that** the connecting means are cables, in particular steel cables (8, 9).

4. Conversion apparatus according to one of the preceding claims, **characterized in that** the hydraulic cylinders (3, 4) in each case have a cable pulley (7) on their piston rods (5, 6).

5. Conversion apparatus according to one of the preceding claims, **characterized by** an electrical connection (18), in particular for connection to a 12 V power supply.

6. Conversion apparatus according to one of the preceding claims, **characterized by** a pressure accumulator (14) for hydraulic fluid for compensating for hydraulic spikes in the hydraulic cylinders (3, 4).

7. Conversion apparatus according to one of the preceding claims, **characterized in that** the hydraulic cylinders (3, 4) have return springs.

8. Cable winch, **characterized in that** it is assigned an apparatus according to one of Claims 1 to 7.

9. Use of an apparatus having the features according to one of Claims 1 to 7 for converting a mechanical cable winch (23), which is driven by a power take-off shaft, to electrohydraulic radio operation.

## Revendications

1. Dispositif de rééquipement (1) pour rééquiper des treuils à câbles mécaniques (23) en vue d'un mode de fonctionnement radio électrohydraulique, comprenant un cylindre hydraulique (3) pour l'actionnement d'un frein du treuil à câble et un cylindre hydraulique (4) pour l'actionnement d'un embrayage du treuil à câble, les deux cylindres hydrauliques étant accouplés à chaque fois à un moyen de connexion (8, 9) pour la connexion à un levier de frein (26) ou à un levier d'embrayage (27) du treuil à câble, comprenant en outre une soupape hydraulique (11) pour la commande des cylindres hydrauliques, laquelle peut être connectée à une alimentation hydraulique, ainsi qu'un récepteur radio (15) pour recevoir des signaux d'un émetteur pour la commande de la soupape hydraulique.

2. Dispositif de rééquipement selon la revendication 1, **caractérisé en ce qu'**il est réalisé sous forme de boîte de rééquipement (1) avec un boîtier (2) de préférence essentiellement fermé.

3. Dispositif de rééquipement selon l'une quelconque des revendications 1 ou 2, **caractérisé en ce que** les moyens de connexion sont des câbles, notamment des câbles métalliques (8, 9).

4. Dispositif de rééquipement selon l'une quelconque des revendications précédentes, **caractérisé en ce que** les cylindres hydrauliques (3, 4) présentent au niveau de leurs tiges de piston (5, 6) à chaque fois une poulie à câble (7).

5. Dispositif de rééquipement selon l'une quelconque des revendications précédentes, **caractérisé par** un raccord électrique (18), notamment pour le raccord à une alimentation en courant de 12 V.

6. Dispositif de rééquipement selon l'une quelconque des revendications précédentes, **caractérisé par** un accumulateur de pression (14) pour fluide hydraulique pour la compensation des pointes hydrauliques dans les cylindres hydrauliques (3, 4).

7. Dispositif de rééquipement selon l'une quelconque des revendications précédentes, **caractérisé en ce que** les cylindres hydrauliques (3, 4) présentent des ressorts de rappel.

8. Treuil à câble, **caractérisé en ce qu'**un dispositif selon l'une quelconque des revendications 1 à 7 lui est associé.

9. Utilisation d'un dispositif ayant les caractéristiques selon l'une quelconque des revendication 1 à 7, pour rééquiper un treuil à câble (23) mécanique entraîné par tourillon en vue d'un mode de fonctionnement radio électrohydraulique.
